# EUROPÄISCHE PATENTANMELDUNG

(11) **EP 1 469 658 A2**
(43) Veröffentlichungstag der Anmeldung: **20.10.2004**
(21) Anmeldenummer: 04008297.6
(22) Anmeldetag: 06.04.2004
(51) Int. Cl.: H04M 1/725

(54) **Verfahren zum Schutz von Daten gegen unberechtigte Benutzung auf einem Mobilfunkgerät**

(30) Priorität: 14.04.2003 DE 10317037
(71) Anmelder: Orga Kartensysteme GmbH, 33104 Paderborn (DE)
(72) Erfinder: Rohner, Christoph, 33129 Delbrück (DE); Hübner, Thomas, 33100 Paderborn (DE); Yaqub, Adnan, 33689 Bielefeld (DE); Enge, Roland, 33106 Paderborn (DE)

(57) **Zusammenfassung**

Die Erfindung betrifft ein Verfahren zum Schutz von Daten gegen unberechtigte Benutzung auf einem Mobilfunkgerät (100), wobei das Mobilfunkgerät auf ein Sicherheitsmodul (106) mit einem ersten Schlüssel (104) zugreifen kann, mit folgenden Schritten:
- Empfang eines verschlüsselten zweiten Schlüssels (206),
- Empfang von Nutzungsrechten (200),
- Eingabe einer Nutzungsanforderung (204),
- Prüfung, ob die Nutzungsrechte für die Nutzungsanforderung ausreichen (202),
- Entschlüsselung des verschlüsselten zweiten Schlüssels mit dem ersten Schlüssel durch Eingabe des verschlüsselten zweiten Schlüssels in das Sicherheitsmodul (210;212),
- Entschlüsselung der Daten mit dem zweiten Schlüssel (214;216).

## Beschreibung

Die Erfindung betrifft ein Verfahren zum Schutz von Daten gegen unberechtigte Benutzung auf einem Mobilfunkgerät sowie ein Computerprogrammprodukt, ein Mobilfunkgerät, eine Chipkarte und ein Computersystem jeweils zum Schutz von Daten gegen unberechtigte Benutzung.

Aus dem Stand der Technik sind verschiedene Systeme für das so genannte Digital Rights Management (DRM) bekannt, die einerseits die Inhaber der Urheberrechte vor unberechtigter Benutzung ihrer digitalen Daten schützen sollen und andererseits Distributionskanäle für die Vermarktung von digitalen Inhalten ermöglichen, wie z. B. den kostenpflichtigen Download, Abonnement von Inhalten oder Pay-per-View. Vorbekannte DRM-Systeme basieren auf unterschiedlichen Schutzmechanismen, wie z. B. Verschlüsselung, Kopierschutzverfahren oder digitale Wasserzeichen.

Beispielsweise ist das folgende DRM-Referenzmodell aus dem Stand der Technik bekannt. Dieses besteht aus den folgenden drei Komponenten: Einem Server, welcher die Daten, d. h. die Inhalte, gespeichert hat (Contentserver), dem Lizenzserver (License Server) und dem Client des Nutzers. Nach diesem DRM-Referenzmodell werden folgende Schritte ausgeführt:
- Der Nutzer (Client) lädt - zum Beispiel von einer Web-Site, FTP Server, E-Mail - die verschlüsselten digitalen Inhalte inklusive Metadaten auf seinen Computer hinunter (Content Package).
- Durch Doppelklick wird eine automatische Anfrage gestartet. Diese aktiviert den DRM-Controller. Einmal aktiviert, sucht der DRM-Controller die nötigen Informationen um die gewünschte Lizenz ausstellen zu können.
- Der DRM-Controller sendet die Identität (Identity) des Nutzers und des digitalen Inhaltes (Content Package) zum Lizenz-Server (License Server).
- Der Lizenz-Server identifiziert den Nutzer mit Hilfe der Identifications Datenbank (Identities).
- Der Lizenz-Server erfasst die Rechteinformationen gemäß der Anfrage des Nutzers (Rights).
- Falls für den digitalen Inhalt eine Zahlung notwendig ist, wird auch eine finanzielle Transaktion gestartet *(Financial Transaction).*
- Erstellung der Lizenz, welche zugleich auch verschlüsselt *(Encryption Keys)* wird. Der *DRM License Generator* stellt die Rechte *(Rights),* die Nutzeridentität *(Identity)* und erstellt und verschlüsselt *(Encryption Keys)* die Lizenz.
- Die Lizenz wird dem Nutzer geschickt.
- Entschlüsselung des digitalen Inhaltes und "Freigabe" des Inhaltes an das Wiedergabegerät *(Rendering Applications).*
- Das Wiedergabegerät spielt, druckt, zeigt, etc. den digitalen Inhalt dem Nutzer an.

Eine aus dem Stand der Technik bekannte Implementierung eines DRM-Systems ist der "Windows Media Rights Manager" von Microsoft. Dieses DRM-System verwendet das Dateiformat "Windows Mediafile" mit den sog. File Extensions wm, wma oder wmv. Hierbei handelt es sich um ein geschütztes und verschlüsseltes Datenformat. Wenn ein Nutzer eine solche Datei herunterlädt, muss er zusätzlich noch einen Schlüssel erwerben, bevor er die Datei nutzen kann. Die Eigentümer oder die so genannten Content-Provider digitaler Inhalte können diese also mit dem "Windows Media Rights Manager" schützen und die zugehörigen Lizenzen definieren und verwalten. Die Funktionsweise des Windows Media Rights Manager ist wie folgt:
- Verpacken und Verschlüsselung: Der Inhalt wird verschlüsselt und zusätzliche Informationen (z. B. Eigentümer) werden eingebunden (*Package Media*). Der Schlüssel zum Entpacken ist in der Lizenz enthalten, die separat vertrieben wird.
- Distribution: Die Inhalte werden auf dem Web-Server gespeichert, können aber auch mittels CD oder E-Mail vertrieben werden (*Post Media*).
- Server für Lizenzen einrichten: Der Eigentümer bestimmt ein "Clearing House" (Verrechnungsstelle), das seine Rechte wahrnimmt (*License Terms*) und die Lizenzen an Kunden verkauft. Dieses könnte man mit der heutigen SUISA ("Schweizerische Gesellschaft für die Rechte der Urheber musikalischer Werke") vergleichen; obwohl die Letztere eine Verwertungsgesellschaft ist und somit nur pauschal die Lizenzgebühren von den Nutzern erhebt.
- Erwerb der Lizenz: Der Nutzer wählt einen digitalen Inhalt aus. Er kann diese Datei auch schon auf seinem Computer abspeichern (*Request and Receive Media*). Doch um die Datei zu nutzen, muss der Nutzer noch einen lizenzierten Schlüssel erwerben (*Request License* / *Download License*) mit welchem man die Datei entsperren und danach abspielen kann.
- Abspielen der Media File: Zum Abspielen der Datei benötigt man einen Player (*Transfer to Portable Device*), welcher den Windows Media Rights Manager unterstützt. Der Nutzer kann dann die Datei gemäß den erworbenen Lizenzbedingungen nutzen. Einschränkungen wie max. Abspielzahl, Ablaufdatum, oder Anzahl Kopien sind möglich. Wenn man die Datei an eine Drittperson weitergibt, muss dieser ebenfalls wieder einen Schlüssel erwerben.

Weitere Informationen hierzu finden sich unter
http://www.microsoft.com/windows/windowsmedia/wm7/drm/architecture.aspx

Weitere solche DRM-Systeme sind auch aus WO 02/101494 A2 und GB 2367925 A bekannt. Aus EP 1271279 A2 ist ferner ein DRM-System für tragbare Geräte bekannt geworden.

Ein gemeinsamer Nachteil solcher vorbekannter DRM-Systeme ist, dass diese im Vergleich zu hardwarebasierten Systemen, insbesondere sogenannten Dongels, nur ein geringeres Maß an Sicherheit bieten. Außerdem sind die vorbekannten DRM-Systeme für Mobilfunkgeräte ungeeignet.

Der Erfindung liegt demgegenüber die Aufgabe zugrunde, ein verbessertes Verfahren zum Schutz von Daten gegen unberechtigte Benutzung auf einem Mobilfunkgerät zu schaffen, sowie ein entsprechendes Computerprogramm, Mobilfunkgerät, Chipkarte und Computersystem.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen unter Schutz gestellt.

Erfindungsgemäß wird für den Schutz von Daten gegen unberechtigte Benutzung ein Sicherheitsmodul verwendet. In dem Sicherheitsmodul ist ein geheimer Schlüssel gespeichert. Hierbei kann es sich beispielsweise um den so genannten private key eines asymmetrischen Verschlüsselungsverfahrens handeln. Es ist jedoch auch die Verwendung eines symmetrischen Schlüssels möglich, der dann ebenfalls geheim zu halten ist.

Das Sicherheitsmodul ist beispielsweise als integrierter Schaltkreis ausgebildet und mit dem Mobilfunkgerät fest verbunden. Nach einer bevorzugten Ausführungsform der Erfindung ist das Sicherheitsmodul in einer Chipkarte realisiert, insbesondere in einem so genannten Subscriber Identification Module (SIM), wie es beispielsweise für GSM-Mobilfunkgeräte verwendet wird. In diesem Fall wird der geheime Schlüssel in einem geschützten Bereich der Chipkarte gespeichert, der einen Schutz vor dem Auslesen des geheimen Schlüssels aus der Chipkarte bietet. In diesem Fall hat das Mobilfunkgerät einen integrierten Chipkartenleser, in den die Chipkarte eingeführt wird.

Nach einer bevorzugten Ausführungsform der Erfindung wird zum Schutz der Daten gegen unberechtigte Benutzung auf dem Mobilfunkgerät wie folgt vorgegangen: Nach Bereitstellung der Daten von einem Content-Provider wird ein Datenschlüssel für diese Daten generiert. Hierbei handelt es sich vorzugsweise um einen symmetrischen Schlüssel. Nach einer bevorzugten Ausführungsform der Erfindung wird die Generierung des Datenschlüssels und die Verschlüsselung der Daten durch eine dritte Instanz wie z.B. eine sog. Device Management Plattform (DMP) bereitgestellt, die von einem Mobilfunkanbieter (z.B. GSM, UMTS, WLAN ) betrieben wird. Beispielsweise kann ein Orga SIMtelligence Center (http://www.orga.com/orgaweb/products.html) die Basis für das DRM bieten.

Der Datenschlüssel wird mit dem zu dem geheimen Schlüssel gehörenden öffentlichen Schlüssel verschlüsselt und an das Mobilfunkgerät übertragen. Zur Erhöhung der Sicherheit kann auch ein Schlüsselaustauschverfahren zum Beispiel nach Diffie-Hellmann verwendet werden. Durch das Schlüsselaustauschverfahren wird zusätzlich die Authentizität des Content Providers bzw. der DMP nachgewiesen. Ferner werden die Nutzungsrechte an das Mobilfunkgerät übertragen, wobei die Nutzungsrechte vorzugsweise ebenfalls mit dem öffentlichen Schlüssel verschlüsselt werden. Alternativ kann ein anderer Schreibschutzmechanismus zur Verhinderung von Manipulationen an den Nutzungsrechten verwendet werden.

Zur Entschlüsselung des Datenschlüssels und gegebenenfalls der Nutzungsrechte übergibt eine Anwendung des Mobilfunkgeräts den verschlüsselten Datenschlüssel und gegebenenfalls die verschlüsselten Nutzungsrechte an das Sicherheitsmodul, d. h. beispielsweise die SIM-Karte. Innerhalb der SIM-Karte werden der verschlüsselte Datenschlüssel und gegebenenfalls die Nutzungsrechte entschlüsselt. Sofern ausreichende Nutzungsrechte vorliegen, wird der entschlüsselte Datenschlüssel an eine Anwendung des Mobilfunkgerätes übergeben. Die verschlüsselten Daten (Content) werden dann mit dem Datenschlüssel entschlüsselt und können auf dem Mobilfunkgerät benutzt werden.

Von besonderem Vorteil ist dabei, dass einerseits die Verwendung von asymmetrischen Schlüsseln ermöglicht wird und andererseits die Verschlüsselung der Daten selbst mit einem anderen Verschlüsselungsverfahren, beispielsweise einem symmetrischen Verschlüsselungsverfahren wie Double oder Tripple DES vorgenommen werden kann. Ein weiterer Vorteil ist, dass durch die Speicherung des geheimen Schlüssels in dem Sicherheitsmodul eine Verbindung des geheimen Schlüssels mit der Hardware gegeben ist, sodass ein höheres Maß an Sicherheit im Vergleich zu vorbekannten DRM-Systemen erreichbar ist. Nach einer weiteren bevorzugten Ausführungsform der Erfindung wird jeder Datenschlüssel für die Verschlüsselung von Daten nur einmal verwendet. Dies gewährleistet einen zusätzlichen Schutz gegen Missbrauch der Daten. Die Notwendigkeit zur Änderung des Datenschlüssel kann an die Nutzungshäufigkeit oder -dauer der Daten (Content) auf dem Mobilfunkgeräte gekoppelt sein. Es sind generell zwei verschieden Verfahren zu unterscheiden :
(a) Erzeugung von geänderten Datenschlüsseln im Sicherheitsmodul (SM) Hierfür wird der Datenschlüssel zur Verschlüsselung der Daten durch einen speziellen geschützten Algorithmus erzeugt. Dieser Algorithmus ermöglicht anhand eines ersten Datenschlüssels weitere geänderte Schlüssel zur Entschlüsselung der Daten zu erzeugen. Dieser Algorithmus wird auch im Sicherheitsmodul (SM) implementiert. Es damit für den Nutzer möglich mit dem Mobilfunkgerät ohne Netzverbindung (Offline) neue geänderte Datenschlüssel zu generieren.
(b) Übertragung eines geänderter Datenschlüssels durch das DMP nach Anfrage durch das Mobilfunkgerät.
   Dabei wird entweder so vorgegangen, dass zunächst eine Liste von Datenschlüsseln generiert wird, aus der dann sukzessive Datenschlüssel für die Verschlüsselung von Daten entnommen werden, oder es wird jeweils ein Datenschlüssel aufgrund einer Übertragungsanforderung für Daten generiert. Nach Übertragung des geänderten, verschlüsselten Datenschlüssel wird dieser im Sicherheitsmodul entschlüsselt und zur weiteren oder widerdeholten Nutzung des Contents verwendet.

Der Vorteil bei beiden Verfahren ist, dass während der Nutzung des Contents das Sicherheitsmodul nicht vom Mobilfunkgerät getrennt werden kann, da es permanent zur Bereitstellung des aktuellen Datenschlüssels benötigt wird.
Der spezifische Vorteil des Verfahrens (a) liegt im Schutz der Privatsphäre des Nutzers und den prinzipielle geringeren Kosten bei der beschriebene Nutzung des Contents ohne Netzverbindung.
Der spezifische Vorteil des Verfahrens (b) liegt auf der Seite des Content Providers oder des Betreibers einer Device Management Plattform (z.b. Mobilfunknetzbetreiber). Er kann die Nutzung von Content besser kontrollieren z.B. Ort und Zeit der Nutzung protokollieren, um das Angebot von Content und Netzwerkdiensten zu optimieren.

Nach einer weiteren bevorzugten Ausführungsform der Erfindung werden der verschlüsselte Datenschlüssel und die verschlüsselten Daten über verschiedene Übertragungskanäle zu dem Mobilfunkgerät übertragen. Beispielsweise erfolgt die Übertragung des verschlüsselten Datenschlüssels über einen Signalisierungskanal des Mobilfunknetzes, insbesondere den so genannten USSD-Kanal oder als SMS, während die Übertragung der verschlüsselten Daten selbst beispielsweise über einen GPRS-Datenkanal erfolgt.

Dies hat insbesondere den Vorteil, dass die für die Übertragung der verschlüsselten Daten erforderliche Zeit für die Übertragung des verschlüsselten Datenschlüssels und gegebenenfalls der Rechte, die Überprüfung der Rechte und Entschlüsselung des Datenschlüssels verwendet werden kann. Die Entschlüsselung der verschlüsselten Daten mit Hilfe des entschlüsselten Datenschlüssels kann dann unmittelbar nach Beendigung der Datenübertragung der verschlüsselten Daten vorgenommen werden

Nach einer weiteren bevorzugten Ausführungsform der Erfindung haben die Datenschlüssel eine begrenzte Nutzungsdauer. Beispielsweise wird vor Ablauf der Nutzungsdauer von der Anwendung des Mobilfunkgerätes ein neuer Datenschlüssel angefordert. Dies erfolgt vorzugsweise ebenfalls über einen Signalisierungskanal, insbesondere USSD.

Die Verwendung eines Signalisierungskanals hat den Vorteil, dass bis zum Empfang des neuen Datenschlüssels eine maximale Latenzzeit garantiert werden kann. Wenn die Anforderung des neuen Datenschlüssels zu einem Zeitpunkt liegt, der mindestens um die maximale Latenzzeit vor dem Ablauf der Nutzungsdauer liegt, kann also eine unterbrechungsfreie Benutzung der Daten auf dem Mobilfunkgerät sichergestellt werden. Für die Übersendung des neuen Datenschlüssels muss der Benutzer typischerweise eine zusätzliche Gebühr bezahlen, die vorzugsweise über ein Gebührenerfassungssystem des Mobilfunknetzwerks dem Benutzer in Rechnung gestellt wird.

Nach einer weiteren bevorzugten Ausführungsform der Erfindung werden verschlüsselte Daten nach einem so genannten WAP Push-Profile an Mobilfunkgeräte übertragen. Die entsprechenden Benutzer erhalten dann die Möglichkeit, z. B. für einen begrenzten Zeitraum oder in einem begrenzten Funktionsumfang, die übertragenen Daten testweise zu verwenden. Wenn ein Benutzer eine weitere Verwendung der Daten wünscht, kann er einen entsprechenden Datenschlüssel mit verlängerter Nutzungsdauer und/oder eine Erweiterung seiner Nutzungsrechte über einen Signalisierungskanal, beispielsweise durch Eingabe eines USSD-Kommandos, anzeigen. Daraufhin wird ein neuer Datenschlüssel und/oder neue Nutzungsrechte, vorzugsweise ebenfalls über den Signalisierungskanal, an das Mobilfunkgerät dieses Benutzers übertragen.

Nach einer weiteren bevorzugten Ausführungsform der Erfindung erfolgt die Speicherung des geheimen Schlüssels in dem SIM bei der so genannten Personalisierung in einem Personalzation Center. Der zu dem geheimen Schlüssel gehörende öffentliche Schlüssel wird dann in ein öffentliches Verzeichnis eingetragen, auf das beispielsweise eine Device Management-Plattform (DMP) zugreifen kann. Zur Identifizierung des Benutzers wird dabei beispielsweise die MSISDN und/oder die IMSI des Benutzers verwendet.

Nach einer weiteren bevorzugten Ausführungsform der Erfindung wird zur Übertragung von Daten zu dem Mobilfunkgerät, und insbesondere zu der SIM-Karte, ein GSM over-the-air (OTA)-Verfahren verwendet. Insbesondere können die verschlüsselten Nutzungsrechte und das verwendete Verschlüsselungsverfahren mittels OTA zu der SIM-Karte des Mobilfunkgeräts übertragen werden.

Ferner kann die Erfindung in Kombination mit anderen vorbekannten Schutzmechanismen verwendet werden. Beispielsweise können die Daten mit einem digitalen Wasserzeichen versehen werden. Das digitale Wasserzeichen kann Daten zur Identifizierung des Benutzers beinhalten, der die Daten angefordert hat. Hierbei kann es sich beispielsweise um die MSISDN oder um die IMSI des Benutzers handeln. Falls der Benutzer illegale Kopien der Daten anfertigt, wird auch dieses Wasserzeichen mitkopiert, sodass eine rechtliche Verfolgung der Urheberrechtsverletzung ermöglicht wird.

Die Erfindung kann grundsätzlich für alle Arten von Daten verwendet werden, d. h. insbesondere Musik-Daten, Video-Daten, Multimedia-Daten, Text-Daten, Anwendungsprogramme, insbesondere Spiele, oder andere Content-Daten, wie z. B. Navigationsdaten für ein in dem Mobilfunkgerät integriertes Navigationssystem.

Im Weiteren werden bevorzugte Ausführungsformen der Erfindung mit Bezugnahme auf die Zeichnungen näher erläutert. Es zeigen:
- Figur 1: ein Blockdiagramm einer Ausführungsform eines erfindungsgemäßen Mobilfunkgerätes,
- Figur 2: ein Flussdiagramm einer Ausführungsform eines erfindungsgemäßen Verfahrens für den Schutz von Daten gegen unberechtigte Benutzung auf dem Mobilfunkgerät
- Figur 3: ein Blockdiagramm einer Ausführungsform eines erfindungsgemäßen Systems für das digitale Rechte Management,
- Figur 4: ein Flussdiagramm einer weiteren Ausführungsform eines erfindungsgemäßen Verfahrens mit Datenschlüsseln begrenzter Nutzungsdauer.

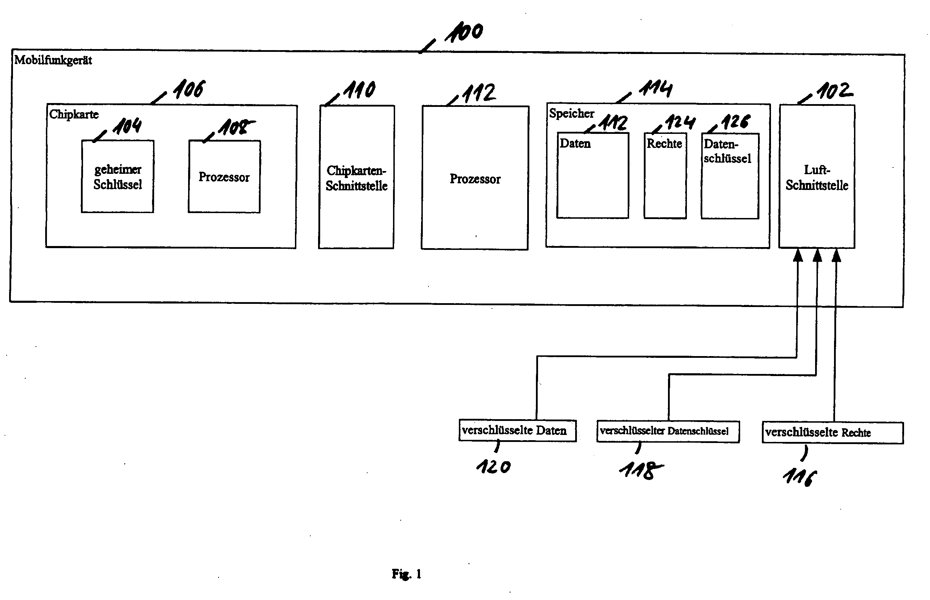

Die Figur 1 zeigt eine Ausführungsform eines Mobilfunkgerätes 100. Bei dem Mobilfunkgerät 100 kann es sich im Prinzip um jedes elektronische Gerät mit einer Luftschnittstelle 102 zu einem Mobilfunknetzwerk, beispielsweise einem GSM-, UMTS- oder CDMA-Netzwerk handeln. Insbesondere kann es sich bei dem Mobilfunkgerät 100 um ein Mobiltelefon, einen PDA, einen tragbaren Computer mit Mobilfunkmodul oder dergleichen handeln.

Neben der Luftschnittstelle 102 kann das Mobilfunkgerät auch weitere Schnittstellen zu anderen Geräten oder dem Internet besitzen wie beispielsweise Universal Serial Bus, Blue Tooth, LAN, WLAN. Auch über diese Schnittstellen läßt sich das erfindungsgemäße Verfahren zum Schutz von Daten vor unberechtigter Benutzung anwenden.

Das Mobilfunkgerät 100 hat ein Sicherheitsmodul, in dem ein geheimer Schlüssel 104 des Benutzers gespeichert ist. In dem hier betrachteten Ausführungsbeispiel ist das Sicherheitsmodul durch eine Chipkarte 106 realisiert. Wenn es sich bei dem Mobilfunkgerät 100 beispielsweise um ein Gerät nach dem GSM-Standard handelt, ist die Chipkarte 106 als so genannte SIM ausgebildet. Die Chipkarte 106 hat einen Prozessor 108, der auf einen geschützten Speicherbereich der Chipkarte 106, in dem der geheime Schlüssel 104 gespeichert ist, zugreifen kann.

Zur Kommunikation zwischen dem Mobilfunkgerät 100 und der Chipkarte 106 weist das Mobilfunkgerät 100 einen integrierten Kartenleser mit einer Chipkartenschnittstelle 110 auf. Das Mobilfunkgerät 100 hat ferner einen Prozessor 112, der wesentlich leistungsfähiger ist als der Prozessor 108 der Chipkarte 106. Ferner hat das Mobilfunkgerät 100 einen Speicher 114, der eine Speicherkapazität aufweist, welche ebenfalls erheblich über der Speicherkapazität des Datenspeichers der Chipkarte 106 liegt.

Bei Betrieb des Mobilfunkgerätes 100 empfängt dieses über die Luftschnittsteile 102 Nutzungsrechte 116. Bei den Nutzungsrechten 116 handelt es sich um Daten, die einen erlaubten Nutzungsumfang beschreiben, beispielsweise hinsichtlich der Häufigkeit, Zeitdauer und/oder der Funktionalitäten der Benutzung. Die Nutzungsrechte 116 werden dabei in schreibgeschützter Form empfangen, um eine Manipulation zu verhindern. Vorzugsweise sind die Nutzungsrechte mit dem öffentlichen Schlüssel des Benutzers verschlüsselt, sodass ein besonders Maß an Sicherheit gegen Manipulation der Nutzungsrechte 116 gegeben ist. Zum Beispiel werden die Nutzungsrechte 116 mittels OTA an das Mobilfunkgerät 100 übertragen.

Im Weiteren wird davon ausgegangen, dass die Nutzungsrechte 116 mit dem öffentlichen Schlüssel des Benutzers verschlüsselt worden sind. In diesem Fall werden die Nutzungsrechte 116 in der Chipkarte 106 mit Hilfe des geheimen Schlüssels 104 von dem Chipkarten Prozessor 108 entschlüsselt. Eine Anwendung (z.b. Java Applet) die auf dem Chipkarten Prozessor 108 läuft prüft dann, ob die Nutzungsrechte 116 für eine Nutzungsanforderung, die beispielsweise der Benutzer über eine Nutzerschnittstelle des Mobilfunkgerätes 100 eingegeben hat, ausreichend sind. Im Falle ausreichender Nutzungsrechte wird über die Chipkartenschnittstelle 110 einen Befehl an eine Anwendung, die auf dem Geräte-Prozessor 112 läuft, übergeben, der die entsprechende Nutzung (z.B. Entschlüsselung und Darstellung von Daten oder digitalem Content) ermöglicht. Das Nutzungsrecht an sich befindet sich im entschlüsselten Zustand nur in der abgesicherten Umgebnung der Chipkarte (106) oder einem anderweitig abgesicherten Prozessor (Sicherheitsmodul) und ist nicht im Zugriff einer Anwendung auf dem Geräteprozessor. Dies ist wesentlich um Manipulationen und Verbreitung der unverschlüsselten Nutzungsrechte zu verhindern.
Beispielsweise wird also eine Nutzungsanforderung durch den Geräte-Prozessor 112 über die Chipkarten-Schnittstelle 110 in die Chipkarte 106 eingegeben. Dort wird durch eine Anwendung, die auf dem Prozessor 108 läuft, überprüft, ob die Nutzungsrechte für die Nutzungsanforderung ausreichend sind. Wenn dies der Fall ist, wird ein entsprechendes Signal über die Chipkartenschnittstelle 110 an den Geräte-Prozessor bzw. dessen Anwendung ausgegeben, so dass die Nutzung der Daten entsprechend der Nutzungsanforderung erfolgen kann. Vorzugsweise verbleiben auch die Nutzungsrechte in einem geschützten Speicherbereich der Chipkarte, um sie vor Manipulationen zu schützen.

Ferner empfängt das Mobilfunkgerät 100 ebenfalls über die Luftschnittstelle 102 einen verschlüsselten Datenschlüssel 118. Bei dem verschlüsselten Datenschlüssel 118 handelt es sich beispielsweise um einen symmetrischen Schlüssel, der mit einem asymmetrischen Verschlüsselungsverfahren, d. h. mit dem zu dem geheimen Schlüssel 104 gehörenden öffentlichen Schlüssel des Benutzers verschlüsselt worden ist. Auch der verschlüsselte Datenschlüssel 118 kann mittels OTA an das Mobilfunkgerät 100 übertragen werden.

Für den Fall, dass die Nutzungsrechte für die Nutzungsanforderung ausreichend sind, gibt der Prozessor 112 über die Chipkartenschnittstelle 110 ein entsprechendes Signal an die Chipkarte 106, sodass der Prozessor 108 mittels des geheimen Schlüssels 104 den verschlüsselten Datenschlüssel 118 entschlüsselt und den entschlüsselten Datenschlüssel über die Chipkartenschnittstelle 110 an die Anwendung, die auf dem Prozessor 112 läuft, übergibt.

Das Mobilfunkgerät 100 empfängt über die Luftschnittstelle 102 verschlüsselte Daten 120 mit dem von dem Nutzer gewünschten Content. Die verschlüsselten Daten 120 werden in dem Speicherbereich 122 des Speichers 114 gespeichert. In dem Speicher 114 sind ferner die Speicherbereiche 124 und 126 vorhanden, in denen die Nutzungsrechte 116 bzw. der Datenschlüssel 118 gespeichert werden können. Nachdem der entschlüsselte Datenschlüssel vorliegt, können die verschlüsselten Daten 120 von dem Prozessor 112 bzw. der darauf laufenden Anwendung entschlüsselt werden. Danach können die Daten im Umfang der Nutzungsrechte 116 verwendet werden, d. h. beispielsweise wiedergegeben werden. Vorzugsweise werden die Nutzungsrechte 116 jedoch nicht in dem Speicherbereich 124 gespeichert, sondern nur in dem geschützten Speicherbereich der Chipkarte 106. In diesem Fall wird vor jeder Nutzung durch die Chipkarte 106 geprüft, ob die entsprechende Nutzungsanforderung im Rahmen der Nutzungsrechte liegt, wie weiter oben erläutert.

Von besonderem Vorteil ist hierbei, dass der geheime Schlüssel 104 fest mit dem Sicherheitsmodul, d. h. der Chipkarte 106, verbunden ist und ferner gegen Auslesen aus der Chipkarte 106 geschützt ist. Durch dieses Einbinden des geheimen Schlüssels 104 in die Hardware ist ein besonders hohes Maß an Sicherheit gegen Manipulationen und damit gegen unberechtigte Benutzungen erreichbar. Andererseits ist von besonderem Vorteil, dass lediglich der verschlüsselte Datenschlüssel 118 und gegebenenfalls die verschlüsselten Nutzungsrechte 116 in der Chipkarte 106 z. B. mittels eines asymmetrischen Entschlüsselungsverfahrens entschlüsselt werden müssen. Die Entschlüsselung der verschlüsselten Daten 120 kann dagegen auf dem wesentlich leistungsfähigeren Prozessor 112 des Mobilfunkgerätes 100 erfolgen. Durch die Verwendung von zwei Verschlüsselungsebenen kann also ein Sicherheitsmodul verwendet werden, welches - im Vergleich zum Mobilfunkgerät 100 - über eine relativ geringe Prozessorleistung und einen relativ kleinen Speicherbereich verfügt. Bei der Verwendung einer Chipkarte 106 ist von weiterem besonderem Vorteil, dass diese zusammen mit verschiedenen Mobilfunkgeräten 100 verwendet werden kann.

Vorzugsweise erfolgt der Empfang der Nutzungsrechte 116 und des verschlüsselten Datenschlüssels 118 einerseits und der verschlüsselten Daten 120 andererseits parallel über verschiedene Kanäle. Beispielsweise wird für die Übertragung der verschlüsselten Nutzungsrechte 116 und des verschlüsselten Datenschlüssels 118 ein Signalisierungskanal des Mobilfunknetzes verwendet, während für die verschlüsselten Daten 120 ein Datenübertragungskanal, beispielsweise GPRS, verwendet wird. Dies hat den Vorteil, dass die Entschlüsselung der Nutzungsrechte, die Überprüfung der Nutzungsberechtigung sowie gegebenenfalls die Entschlüsselung des verschlüsselten Datenschlüssels 118 bereits erfolgen kann, während die Übertragung der verschlüsselten Daten 120 zu dem Mobilfunkgerät 100 noch läuft. Vorzugsweise wird als Signalisierungskanal ein USSD-Kanal oder SMS verwendet.

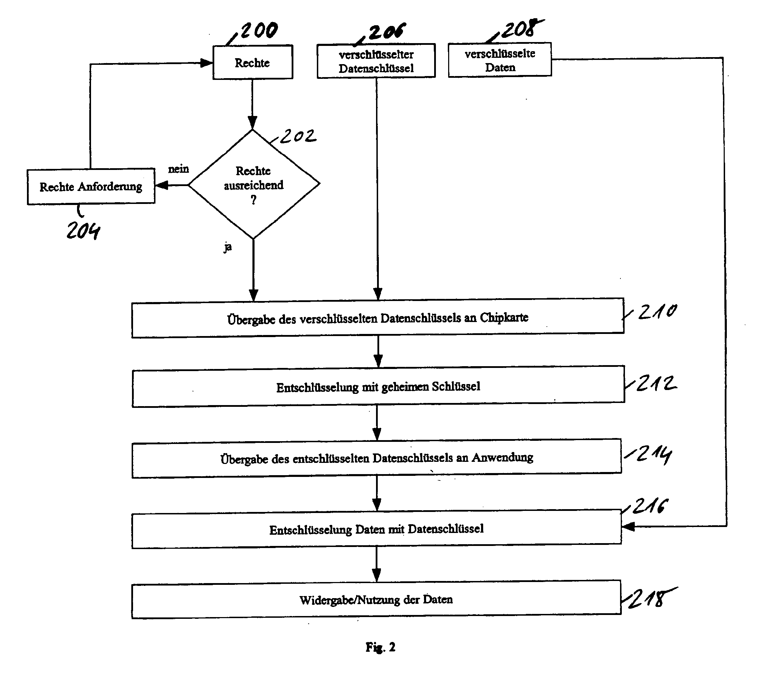

Die Figur 2 zeigt ein entsprechendes Flussdiagramm. In dem Schritt 200 werden Nutzungsrechte zu dem Mobilfunkgerät übertragen. In dem Schritt 202 wird überprüft, ob die Nutzungsrechte für eine Nutzungsanforderung ausreichend sind. Ist dies nicht der Fall, so werden in dem Schritt 204 erweiterte Nutzungsrechte angefordert. Dies kann automatisiert durch eine Anwendung des Mobilfunkgerätes 100 erfolgen, beispielsweise durch ein so genanntes Applet.

In dem Schritt 206 wird ein verschlüsselter Datenschlüssel (vergleiche verschlüsselter Datenschlüssel 118 der Figur 1) zu dem Mobilfunkgerät 100 übertragen. Ferner werden in dem Schritt 208 die verschlüsselten Daten zu dem Mobilfunkgerät übertragen.

Wenn die Prüfung in dem Schritt 202 ergeben hat, dass die eingeräumten Nutzungsrechte ausreichend sind, wird in dem Schritt 210 der verschlüsselte Datenschlüssel an die Chipkarte übergeben. In dem Schritt 212 erfolgt die Entschlüsselung des verschlüsselten Datenschlüssels mit dem in der Chipkarte gespeicherten geheimen Schlüssel.

In dem Schritt 214 wird der entschlüsselte Datenschlüssel an die Anwendung des Mobilfunkgerätes übergeben. Diese entschlüsselt in dem Schritt 216 die verschlüsselten Daten mit Hilfe des entschlüsselten Datenschlüssels. Danach erfolgt in dem Schritt 218 je nach der Art der Daten deren Wiedergabe oder sonstige Nutzung. Zusätzlich kann auch der für die asymmetrische und/oder symmetrische Verschlüsselung verwendete Verschlüsselungsalgorithmus mit zu dem Mobilfunkgerät übertragen werden. In diesem Fall benötigt dieses kein a priori Wissen über das oder die verwendeten Verschlüsselungsverfahren.

Außerdem ist es möglich, Benutzer-Autorisierungsinformationen zu dem Mobilfunkgerät zu übertragen. Hierbei kann es sich beispielsweise um eine PIN des Benutzers handeln. Um sicherzustellen, dass nur ein autorisierter Benutzer auf den Content zugreift bzw. diesen verwendet, muss der Benutzer zuvor über die Nutzerschnittstelle des Mobilfunkgerätes seine PIN eingeben.

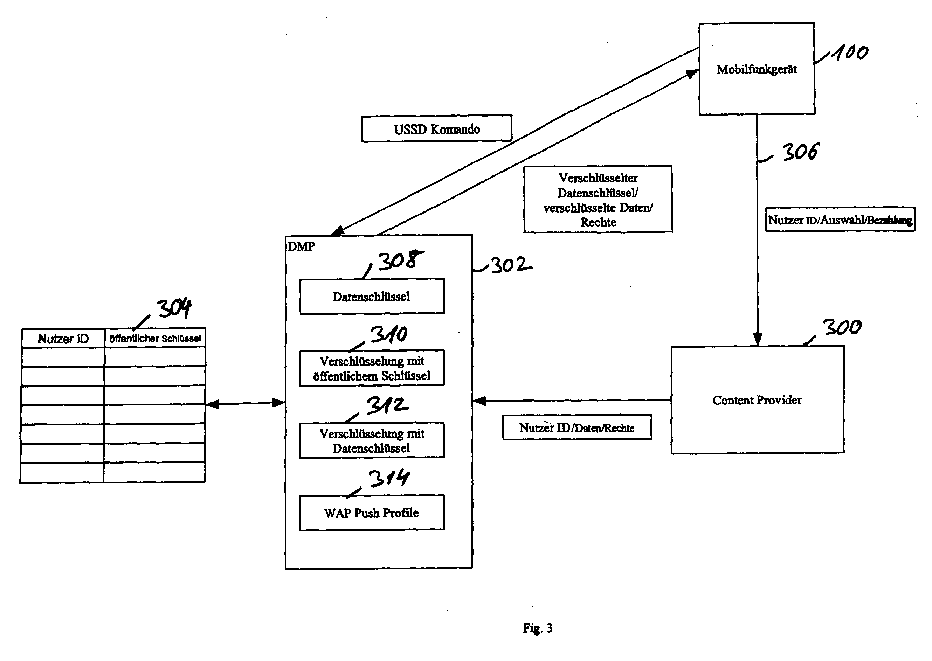

Die Figur 3 zeigt ein Blockdiagramm eines entsprechenden Systems für das digitale Rechte Management. Dieses System beinhaltet einen Servercomputer 300 eines so genannten Content-Providers. Beispielsweise ist auf dem Servercomputer 300 ein so genannter Mobile Commerce Shop realisiert, der eine Plattform für die Auswahl von Daten, d. h. Content, bietet.

Ferner beinhaltet das System einen Servercomputer 302 zur Realisierung einer Device Managment-Plattform (DMP). Ferner kann ein weiterer Servercomputer 304 zur Verfügungstellung eines Verzeichnisses mit den öffentlichen Schlüsseln der Benutzer vorhanden sein. Alternativ können die Plattformen zur Auswahl von Content, die Device Management-Plattform und/oder das Verzeichnis auf einem einzigen Servercomputer oder auf mehreren Computern verteilt realisiert sein.

Im Betrieb wird zwischen dem Mobilfunkgerät 100 und dem Content-Provider 300 eine drahtlose Verbindung aufgebaut, beispielsweise mittels WAP oder mit einem TCP/IP-Protokoll. Über diese Verbindung 306 wird eine Nutzer-ID übertragen. Hierbei handelt es sich beispielsweise um die Telefonnummer des Nutzers, d. h. die so genannte MSISDN, und/oder die IMSI. Der Benutzer wählt auf der Content-Plattform des Servercomputers 300 die gewünschten Daten aus und bezahlt dafür, beispielsweise durch Angabe seiner Kreditkartennummer. Die Höhe des Nutzungsentgelts hängt dabei typischerweise von dem von dem Benutzer gewählten Nutzungsumfang, d. h. dem ihm einzuräumenden Nutzungsrechten ab. Die Abrechnung kann in einer bevorzugten Ausführungsform durch ein Gebührenerfassungssystem des Mobilfunknetzwerkes erfolgen.

Der von dem Nutzer gewählte Content, d. h. die Daten, sowie die Nutzungsrechte werden von dem Servercomputer 300 an den Servercomputer 302 übertragen. Die Zuordnung der Daten und der Nutzungsrechte zu einem bestimmten Nutzer erfolgt dabei über die Nutzer-ID.

Über die Nutzer ID ist zusätzlich möglich weiter auf der DMP gespeicherten Daten des Nutzer zur Authentisierung und Autorisierung des Benutzers zu verwenden. So lässt sich zum Beispiel die Verwendung bestimmten Contents auf gewisse Altersgruppen einschränken.
Dies ist vor dem Hintergrund der vor kurzem verabschiedeten Gesetzen :
JgefSchrG : Gesetz über die Verbreitung jugendgefährdender Schriften und Medieninhalte
JÖSchG : Gesetz zum Schutze der Jugend in der Öffentlichkeit (Artikel 1 des Gesetzes zur Neuregelung des Jugendschutzes in der Öffentlichkeit) von Bedeutung.

Die beschriebene technische Lösung sind für die technischen Vorkehrungen nach §5 Abs. 3 geeignet. Hier stellt die Teilnehmer-Authentisierung und Autorisierung sowie die anonymisierte Abbildung ( Speicherung und Verwaltung ) der Einschränkungen und Filterfunktionen ( vorzugsweise nach Empfehlungen der ICRA - Internet Content Association, sowie der FSM - Freiwilligen Selbstkontrolle Multimedia ) auf dem DMP ( Device Management Plattform ) eine Neuerung dar für die bisherige Teilnehmerverwaltungssysteme und DRM Systeme ungeeignet sind. Hierdurch wird der Anbieter von Telekommunikationsdienstleistungen und Kommunikationsmedien ( z.B. Mobilfunk-Netzbetreiber ) in die Lage versetzt diesen Gesetzen umfangreich und mit hochentwickelten technischen Vorkehrungen in komfortabelster Weise folge zu leistenDer Servercomputer 302 hat ein Modul 308 zur Bereitstellung eines Datenschlüssels. Dabei kann es sich um eine Liste von vorgenerierten Datenschlüsseln handeln oder um ein Computerprogramm zur Erzeugung eines Datenschlüssels oder um eine Kombination aus beidem.

Ferner hat der Servercomputer 302 ein Modul 310 zur Verschlüsselung mit einem öffentlichen Schlüssel sowie ein Modul 312 zur Verschlüsselung mit einem Datenschlüssel. Der Servercomputer 302 kann ferner ein Modul 314 zur Realisierung eines WAP-Push-Profils beinhalten.

Nachdem der Servercomputer 302 die Daten und die Nutzungsrechte für den Nutzer mit der Nutzer-ID von dem Servercomputer 300 empfangen hat, wird durch das Modul 308 ein Datenschlüssel, z. B. für die symmetrische Verschlüsselung bereitgestellt. Mit Hilfe der Nutzer-ID wird ferner eine Datenbankabfrage des Servercomputers 304 durchgeführt, um den öffentlichen Schlüssel des Nutzers zu ermitteln.

Der von dem Modul 308 bereitgestellte Datenschlüssel wird in dem Modul 310 mit dem so ermittelten öffentlichen Schlüssel verschlüsselt. Vorzugsweise werden auch die Nutzungsrechte von dem Modul 310 mit dem öffentlichen Schlüssel verschlüsselt. Der Content, d. h. die Daten, werden durch das Modul 312 mit dem Datenschlüssel 308, z. B. mit einem symmetrischen Verschlüsselungsverfahren verschlüsselt.

Der verschlüsselte Datenschlüssel, die verschlüsselten Rechte und die verschlüsselten Daten werden dann von dem Servercomputer 302 an das Mobilfunkgerät 100 übertragen. Vorzugsweise erfolgt dabei die Übertragung des verschlüsselten Datenschlüssels und der verschlüsselten Rechte über einen Signalisierungskanal des Mobilfunknetzes, während die Übertragung der verschlüsselten Daten über einen Datenkanal erfolgt.

In dem Mobilfunkgerät 100 kann dann die geschützte Nutzung der Daten durch den autorisierten Benutzer erfolgen, wie mit Bezug auf die Figuren 1 und 2 oben erläutert. Eine Erweiterung und/oder Verlängerung der Nutzungsrechte kann von dem Benutzer durch Eingabe eines entsprechenden USSD-Kommandos veranlasst werden, welches an den Servercomputer 302 und/oder an den Servercomputer 300 übertragen wird. Daraufhin wird an das Mobilfunkgerät 100 ein neuer Datenschlüssel mit längerer Nutzungsdauer und/oder erweiterte Nutzungsrechte übertragen. Die Abrechnung kann dabei durch ein Gebührenerfassungssystem des Mobilfunknetzwerkes erfolgen.

Ferner ist es auch möglich, dass die Übertragung von Daten an das Mobilfunkgerät 100 nach dem WAP-Push-Profil des Moduls 314 ohne vorherige Nutzeranforderung erfolgt. Der Nutzer erhält in diesem Fall unaufgefordert Content, den er z. B. für eine gewisse Zeit oder in einem eingeschränkten Nutzungsumfang testweise verwenden kann. Wenn der Benutzer eine darüber hinausgehende Nutzung erwünscht, kann er dies durch Eingabe eines entsprechenden Kommandos, beispielsweise eines USSD-Kommandos, gegenüber dem Servercomputer 302 und/oder dem Content-Provider 300 mitteilen, woraufhin der Nutzer, d. h. dessen Mobilfunkgerät 100, einen entsprechenden neuen Datenschlüssel und/oder erweiterte Nutzungsrechte erhält.

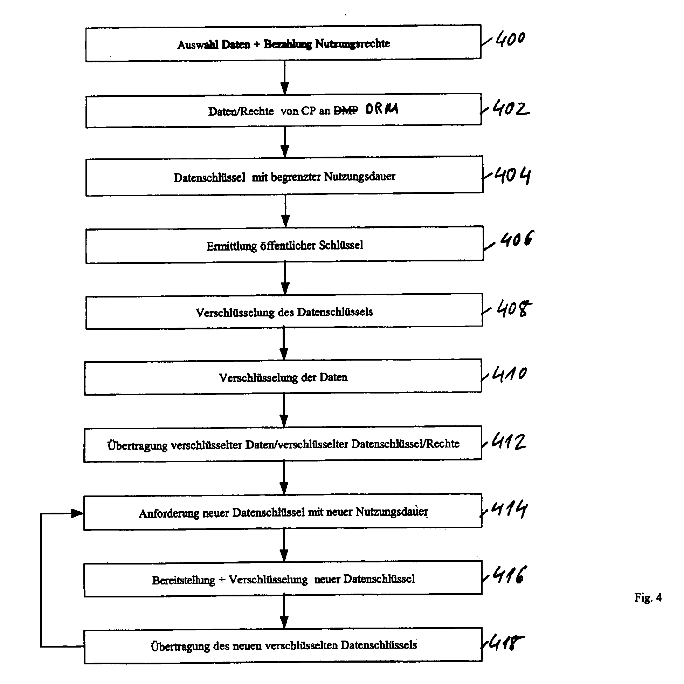

Die Figur 4 zeigt eine weitere Ausführungsform eines erfindungsgemäßen Verfahrens. In dem Schritt 400 wählt ein Nutzer Daten aus und bezahlt für entsprechende Nutzungsrechte. Die Daten und die Nutzungsrechte werden von dem entsprechenden Content-Provider an eine Device Management Plattform (DMP) mit einem DRM System übertragen. Die Zuordnung zu dem Nutzer erfolgt dabei über eine Nutzer-ID, beispielsweise die Telefonnummer des Nutzers.

In dem Schritt 404 wird von der Device Management Plattform (DMP) ein Datenschlüssel mit begrenzter Nutzungsdauer erzeugt oder bereitgestellt. In dem Schritt 406 wird der öffentliche Schlüssel des Benutzers durch Abfrage eines entsprechenden Verzeichnisservers ermittelt. In dem Schritt 408 wird der Datenschlüssel mit dem öffentlichen Schlüssel verschlüsselt. Die Daten werden in dem Schritt 410 mit dem Datenschlüssel verschlüsselt.

In dem Schritt 412 werden der verschlüsselte Datenschlüssel sowie die vorzugsweise ebenfalls verschlüsselten Nutzungsrechte sowie die verschlüsselten Daten an das Mobilfunkgerät des Nutzers übertragen. Die Reihenfolge der Schritte 404 bis 410 ist dabei nicht wesentlich; ebenso ist die Reihenfolge der Datenübertragung nicht von grundsätzlicher Bedeutung.

Nachdem die Nutzungsdauer des Datenschlüssels abgelaufen ist oder kurz davor ist abzulaufen, wird in dem Schritt 414 von der Device Management Plattform (DMP) eine Anforderung eines neuen Datenschlüssels mit verlängerter Nutzungsdauer empfangen. Dieser wird in dem Schritt 416 bereitgestellt und mit dem öffentlichen Schlüssel des Nutzers verschlüsselt.

In dem Schritt 418 wird der neue verschlüsselte Datenschlüssel übertragen, sodass der Benutzer die Verwendung der Daten fortsetzen kann. Vorzugsweise erfolgt die Übertragung des neuen verschlüsselten Datenschlüssels über einen Signalisierungskanal, was den Vorteil hat, dass die Übertragungszeit relativ kurz ist und eine maximale Übertragungszeit, d. h. eine maximale Latenzzeit, garantiert werden kann.

Vorzugsweise erfolgt die Anforderung des neuen Datenschlüssels (Schritt 414) ebenfalls über einen solchen Signalisierungskanal, beispielsweise USSD. Dies hat den Vorteil, dass eine unterbrechungsfreie Benutzung der Daten sichergestellt werden kann, wenn die Anwendung des Mobilfunkgeräts zu einem Zeitpunkt die Anforderung nach dem neuen Datenschlüssel absendet, der mindestens um die Latenzzeit vor dem Ablauf der Nutzungsdauer des gerade verwendeten Datenschlüssels liegt.

Dieser Vorgang zur Verlängerung der Nutzungsdauer kann beliebig oft wiederholt werden, wobei die Abrechnung vorzugsweise über ein Gebührenerfassungssystem des Mobilfunknetzwerkes erfolgt.

Vorzugsweise erfolgen sämtliche Datenübertragungen zwischen den Systemteilnehmern drahtlos, über ein Mobilfunknetzwerk, d. h. die Datenübertragungen zwischen dem Mobilfunkgerät, dem Content-Provider und der Device Management Plattform (DMP). Es ist jedoch auch möglich, dass zumindest einige dieser Datenübertragungen über ein Festnetz erfolgen, insbesondere die Auswahl von Content und die Datenübertragungen zwischen dem Content-Provider, der Device Management Plattform (DMP) und dem Verzeichnisserver.

### Bezugszeichenliste

- Mobilfunkgerät: 100
- Luftschnittstelle: 102
- geheimer Schlüssel: 104
- Chipkarte: 106
- Chipkarten-Prozessor: 108
- Chipkarten-Schnittstelle: 110
- Geräte-Prozessor: 112
- Speicher: 114
- Nutzungsrechte: 116
- verschlüsselter Datenschlüssel: 118
- verschlüsselte Daten: 120
- Speicherbereich: 122
- Speicherbereich: 124
- Speicherbereich: 126
- Content Server: 300
- Device Management Plattform: 302
- Verzeichnis der öffentlichen Schlüssel: 304
- Verbindung: 306
- Modul: 308
- Modul: 310
- Modul: 312
- Modul: 314

## Patentansprüche

1. Verfahren zum Schutz von Daten gegen unberechtigte Benutzung auf einem Mobilfunkgerät, wobei das Mobilfunkgerät auf ein Sicherheitsmodul mit einem ersten Schlüssel zugreifen kann, mit folgenden Schritten:
- Empfang eines verschlüsselten zweiten Schlüssels,
- Empfang von Nutzungsrechten,
- Eingabe einer Nutzungsanforderung,
- Prüfung, ob die Nutzungsrechte für die Nutzungsanforderung ausreichen,
- Entschlüsselung des verschlüsselten zweiten Schlüssels mit dem ersten Schlüssel durch Eingabe des verschlüsselten zweiten Schlüssels in das Sicherheitsmodul,
- Entschlüsselung der Daten mit dem zweiten Schlüssel.

2. Verfahren nach Anspruch 1, wobei es sich bei dem ersten Schlüssel um einen geheimen Schlüssel eines asymmetrischen Schlüsselpaares handelt.

3. Verfahren nach Anspruch 1 oder 2, wobei es sich bei dem Sicherheitsmodul um eine Chipkarte handelt, und der erste Schlüssel in einem gesicherten Bereich der Chipkarte gespeichert ist.

4. Verfahren nach Anspruch 3, wobei der verschlüsselte zweite Schlüssel über eine Chipkartenschnittstelle in die Chipkarte eingegeben wird, die Chipkarte den verschlüsselten zweiten Schlüssel mittels des ersten Schlüssels entschlüsselt und den entschlüsselten zweiten Schlüssel über die Chipkartenschnittstelle an das Mobilfunkgerät ausgibt.

5. Verfahren nach einem der vorhergehenden Ansprüche 1 bis 4, wobei der Empfang des verschlüsselten zweiten Schlüssels über einen Signalisierungskanal erfolgt und die verschlüsselten Daten über einen Datenkanal empfangen werden.

6. Verfahren nach einem der vorhergehenden Ansprüche 1 bis 5, wobei der verschlüsselte zweite Schlüssel durch Eingabe eines USSD-Kommandos in das Mobilfunkgerät angefordert wird und der verschlüsselte zweite Schlüssel über einen USSD-Kanal empfangen wird.

7. Verfahren nach einem der vorhergehenden Ansprüche 1 bis 6, wobei der verschlüsselte zweite Schlüssel in Form einer elektronischen Nachricht, insbesondere einer SMS, empfangen wird.

8. Verfahren nach einem der vorhergehenden Ansprüche 1 bis 7, wobei der zweite Schlüssel eine begrenzte Nutzungsdauer aufweist, wobei durch ein Programm des Mobilfunkgeräts vor Ablauf der Nutzungsdauer ein weiterer zweiter Schlüssel angefordert wird.

9. Verfahren nach Anspruch 8, wobei es sich bei dem Programm um ein Applet handelt.

10. Verfahren nach einem der vorhergehenden Ansprüche 1 bis 9, wobei es sich bei dem zweiten Schlüssel um einen symmetrischen Schlüssel handelt.

11. Verfahren nach einem der vorhergehenden Ansprüche 1 bis 10, wobei die Bezahlung der Nutzungsrechte über ein Gebührenerfassungssysstem eines Mobilfunknetzwerkes des Mobilfunkgerätes erfolgt.

12. Computerprogrammprodukt, insbesondere digitales Speichermedium, zum Schutz von Daten gegen unberechtigte Benutzung auf einem Mobilfunkgerät, wobei das Mobilfunkgerät auf ein Sicherheitsmodul mit einem ersten Schlüssel zugreifen kann, mit Programmmitteln zur Durchführung der folgenden Schritte:
- Eingabe von Nutzungsrechten,
- Eingabe einer Nutzungsanforderung,
- Prüfung, ob die Nutzungsrechte für die Nutzungsanforderung ausreichen,
- Ausgabe des verschlüsselten zweiten Schlüssels an das Sicherheitsmodul,
- Eingabe des Mittels des ersten Schlüssels von dem Sicherheitsmodul entschlüsselten zweiten Schlüssels,
- Entschlüsselung der Daten mit dem zweiten Schlüssel.

13. Computerprogrammprodukt nach Anspruch 12, wobei der zweite Schüssel eine begrenzte Nutzungsdauer aufweist, und die Programmmittel dazu ausgebildet sind, dass vor Ablauf der Nutzungsdauer ein weiterer zweiter Schlüssel angefordert wird.

14. Computerprogrammprodukt nach Anspruch 12 oder 13, wobei die Programmmittel zur Anforderung von erweiterten Nutzungsrechten über einen Signalisierungskanal ausgebildet sind.

15. Computerprogrammprodukt nach Anspruch 14, wobei es sich bei dem Signalisierungskanal um einen USSD-Kanal handelt.

16. Mobilfunkgerät mit einem Sicherheitsmodul (106), in dem ein erster Schlüssel (104) gespeichert ist, mit Mitteln (112) zur Prüfung, ob Nutzungsrechte eines Benutzers für eine Nutzungsanforderung ausreichend sind, und mit Mitteln (112) zur Entschlüsselung der Daten mit einem zweiten Schlüssel, wobei die Mittel zur Entschlüsselung der Daten zur Eingabe des verschlüsselten zweiten Schlüssels in das Sicherheitsmodul ausgebildet sind, sodass das Sicherheitsmodul den verschlüsselten zweiten Schlüssel mittels des ersten Schlüssels entschlüsselt und den entschlüsselten zweiten Schlüssel an die Mittel zur Entschlüsselung der Daten ausgibt.

17. Mobilfunkgerät nach Anspruch 16, wobei es sich bei dem Sicherheitsmodul um eine Chipkarte handelt.

18. Mobilfunkgerät nach Anspruch 16 oder 17, wobei es sich bei dem ersten Schlüssel um einen geheimen Schlüssel eines asymmetrischen Schlüsselpaares handelt.

19. Chipkarte mit einem gesicherten Bereich zur Speicherung eines ersten Schlüssels (104) und mit Prozessormitteln (108) zur Entschlüsselung eines verschlüsselten zweiten Schlüssels (118) mit dem ersten Schlüssel zur nachfolgenden Entschlüsselung von Daten (120) mit dem entschlüsselten zweiten Schlüssel für eine berechtigte Benutzung der Daten auf einem Mobilfunkgerät (100).

20. Chipkarte nach Anspruch 19, wobei es sich bei dem ersten Schlüssel um einen geheimen Schlüssel eines asymmetrischen Schlüsselpaares handelt.

21. Computersystem zum Schutz von Daten gegen unberechtigte Benutzung auf einem Mobilfunkgerät (100) und zur Ermöglichung der Nutzung der Daten auf dem Mobilfunkgerät im Rahmen von einem Nutzer des Mobilfunkgeräts eingeräumten Nutzungsrechten, wobei das Mobilfunkgerät auf ein Sicherheitsmodul (106) mit einem ersten Schlüssel (104) zugreifen kann, mit
- Mitteln (308) zur Bereitstellung eines zweiten Schlüssels für die empfangenen Daten,
- Mitteln (310) zur Verschlüsselung des zweiten Schlüssels so, dass er mit dem ersten Schlüssel entschlüsselbar ist,
- Mitteln (302) zur Übertragung des verschlüsselten zweiten Schlüssels und der Nutzungsrechte an das Mobilfunkgerät,
- Mitteln (302, 312) zur Verschlüsselung der Daten mit dem zweiten Schlüssel und zur Übertragung der Daten an das Mobilfunkgerät.

22. Computersystem nach Anspruch 21, wobei es sich bei der Nutzerkennung um eine MSISDN und/oder eine IMSI handelt.

23. Computersystem nach Anspruch 21 oder 22, wobei es sich bei dem ersten Schlüssel um einen geheimen Schlüssel eines asymmetrischen Schlüsselpaares handelt, und die Verschlüsselung des zweiten Schlüssels mit dem dem geheimen Schlüssel zugeordneten öffentlichen Schlüssel erfolgt, wobei der öffentliche Schlüssel des Nutzers durch Zugriff auf eine Datenbank (304) mit der Nutzerkennung ermittelt wird.

24. Computersystem nach Anspruch 21, 22 oder 23, wobei es sich bei dem zweiten Schlüssel um einen symmetrischen Schlüssel handelt.

25. Computersystem nach einem der vorhergehenden Ansprüche 21 bis 24, mit Mitteln zur Anforderung der Daten und/oder von Nutzungsrechten über einen Signalisierungskanal eines Mobilfunknetzes des Mobilfunkgerätes.

26. Computersystem nach einem der vorhergehenden Ansprüche 21 bis 25, mit einem WAP Push-Profil (314) für eine Anzahl von Nutzern zur Übertragung von mit dem zweiten Schlüssel entschtüsseibaren Daten an die Nutzer.

27. Computersystem nach einem der vorhergehenden Ansprüche 1 bis 26, wobei die Mittel zur Erzeugung eines zweiten Schlüssels so ausgebildet sind, dass nach jeder Verwendung eines zweiten Schlüssels für die Verschlüsselung der Daten ein neuer zweiter Schlüssel erzeugt wird.

28. Computersystem nach einem der vorhergehenden Ansprüche 21 bis 27, wobei die Mittel zur Erzeugung eines zweiten Schlüssels eine Tabelle mit zweiten Schlüsseln aufweisen, die jeweils nur einmal für eine Verschlüsselung verwendet werden.
